## Europäisches Patentamt

## European Patent Office

## Office européen des brevets

(19)

(11) Publication number: **0 238 179**
**B1**

(12) # EUROPEAN PATENT SPECIFICATION

(45) Date of publication of the patent specification:
**04.10.89**

(51) Int. Cl.⁴: **B65G 65/28**

(21) Application number: **87300867.6**

(22) Date of filing: **30.01.87**

(54) **Bridge scraper.**

(30) Priority: **18.03.86 GB 8606677**

(43) Date of publication of application:
**23.09.87 Bulletin 87/39**

(45) Publication of the grant of the patent:
**04.10.89 Bulletin 89/40**

(84) Designated Contracting States:
**AT DE ES FR GB**

(56) References cited:
**DE-A- 2 136 160**

(73) Proprietor: **F.L. Smidth & Co. A/S, 77 Vigerslev Alle,
DK-2500 Valby Copenhagen(DK)**

(72) Inventor: **Hoffmeyer, Hendrik Strange, 77 Vigerslev Alle,
DK-2500 Valby Copenhagen(DK)**

(74) Representative: **Jackson, Peter Arthur, GILL JENNINGS
& EVERY 53-64 Chancery Lane, London WC2A 1HN(GB)**

## Description

The invention relates to a bridge scraper (hereinafter referred to as of the kind described) for raking material from a detached bulk material heap, the bridge scraper comprising a bridge, which extends, in use, substantially horizontally along the base of a sloping heap face; and a harrow of triangular lattice construction and having a base, which is movable to and fro along the bridge; the harrow being supported partly by wheel sets mounted at respective ends of the harrow base and travelling on a rail which is pivotally mounted about an axis parallel to its length on, and parallel to, the bridge and partly by a wire extending from the harrow apex over a sheave, at the top of a tower in the middle of the bridge, to a winch for adjusting the inclination of the harrow; and each wheel set cooperating with the profile of the rail to inhibit relative pivoting of the wheel set relatively to the rail about an axis in the plane of the harrow and perpendicular to the rail.

A bridge scraper of the kid desribed is well-know.

Each supporting wheel set normally comprises one or more wheels positioned in a bracket on the harrow base, the wheel axes lying in a plane perpendicular to the base and their treads engaging, and cooperating with the profile of, the rail to guide the harrow along the rail.

The rail is pivotally mounted on the bridge, allowing it to turn and thus ensuring full engagement between the wheel treads and the rail when the inclination of the harrow is adjusted to the slope of the material heap face to be raked.

To make the harrow light the triangular construction is comparatively slender. Consequently, the sides of the triangular harrow construction will be bent more or less out of the plane of the harrow owing to the influences of gravity and the force exerted on the harrow during operation.

The wheels are mounted on the harrow base so as to travel along the straight rail parallel to the base, but, when the harrow base is bent, the direction of travel of the wheels will deviate from the direction of the rail, and the wheels will tend to roll off the rail. If the wheels are forced to follow the rail their movement will be a combined rolling and sliding, causing heavy wear on the wheels as well as on the rail.

It is an object of the invention to provide a support for the harrow by which these drawbacks are avoided.

This is achieved when, in accordance with the invention, each wheel set of a bridge scraper of the kind described comprises at least one pair of wheels, which are mutually spaced in the direction of the rail, the wheels being mounted in a bogie, which is mounted on the harrow by a joint permitting comparatively free pivotal movements between the harrow and the bogie except about an axis parallel to the rail.

If a joint permitting full universal free pivotal movement is established between the harrow and the bogie there may be a risk that the bogie will tilt and the harrow fall down. Therefore the degrees of freedom involving a risk of tilting are restricted by using wheel sets with pairs of wheels spaced in the direction of the rail, and inhibiting the relative movement of the harrow and the bogie about an axis parallel to the rail.

The joint between the harrow and the bogie may be a universal joint, such as a ball joint, coupled between brackets on the harrow base and on the bogie.

The joint may be substantially locked against relative pivotal movements of the harrow and the bogie about an axis parallel to the rail because the harrow base is a beam with a rectangular profile and a bracket on the bogie has a narrow bearing surface immediately adajacent to, and engageable with, two adjacent side walls of that beam along lines perpendicular to its length.

Alternatively, the bogie may be encompassed by a housing on the harrow adjacent to where the joint is positioned between the housing and the bogie, and narrow bearing surfaces of the housing are immediately adjacent to, and engageable with, the sides of the bogie along lines in a central plane of the bogie perpendicular to the rail.

The examples of bridge scraper in accordance with the invention are illustrated in the accompanying drawings, in which:-

Figure I shows schematically a bridge scraper with a raking harrow travelling to and fro;

Figure 2 shows one example of bogie mounted on the harrow;

Figure 3 is a side view of the bogie of Figure 2;

Figure 4 shows partly in section another example of a bogie mounted on a harrow; and,

Figure 5 is a view in the direction A-A of the bogie according to Figure 4.

In Figure I the bridge scraper is shown raking material from the sloping front face I of a material heap 2. A bridge 3 extends along the base of the head front face and a rail 4 is mounted parallel to the bridge 3 in brackets 5, which allow the rail to pivot about an axis parallel to its length.

A triangular harrow 6 is carried by a wheel set 7 and 7′ at each end of the harrow base, and a wire 8 which passes from the harrow apex g over a sheave I0 at the top of a tower (not shown) to a winch II, by which the inclination of the harrow 6 may be adjusted to make the harrow plane parallel to the heap front face.

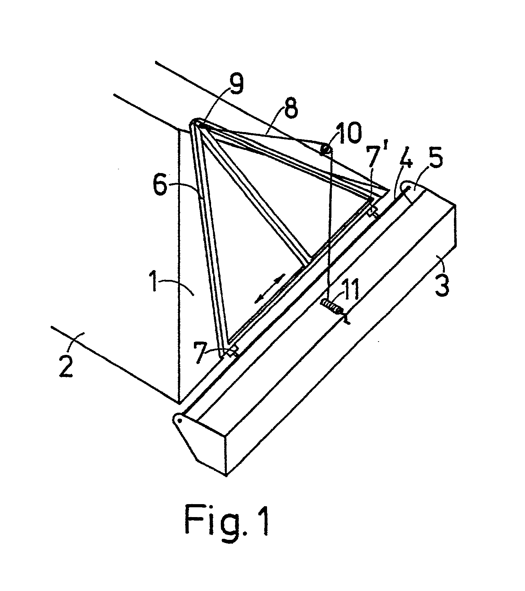

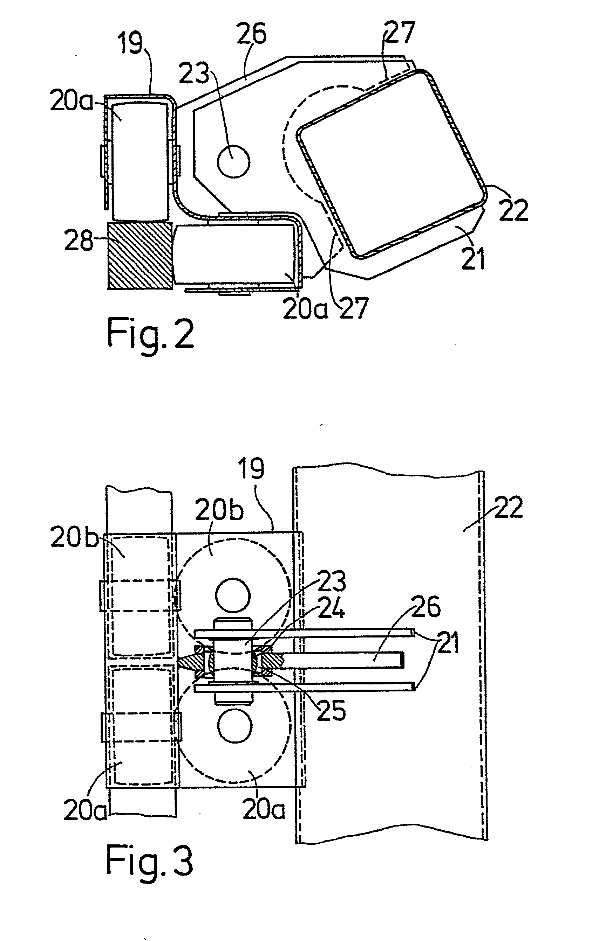

Figures 2 and 3 show a construction of a wheel set bogie Ig, which has two pairs of spaced wheels 20a, 20b, each pair engaging a side of a pivotally suspended rail 28 corresponding to the rail 4 in Figure I.

Between two brackets 2I mounted on a base beam 22 of the harrow is a shaft 23 carrying a ball 24 of a ball joint, a ball cup 25 of which is mounted in a bracket 26 on the bogie I9. The bracket 26 has a claw-shaped extension with two surfaces 27 almost engaging two adjacent sides of the rectangular harrow base beam 22.

In this way all kinds of pivotally adjusting movements between the harrow and the bogie may take place through movements about the ball joint, except pivotal movements about an axis parallel to the rail 4. Such pivotal movements due to changes in the harrow inclination take place about the axis determined by the pivotal suspensions of the rail 4.

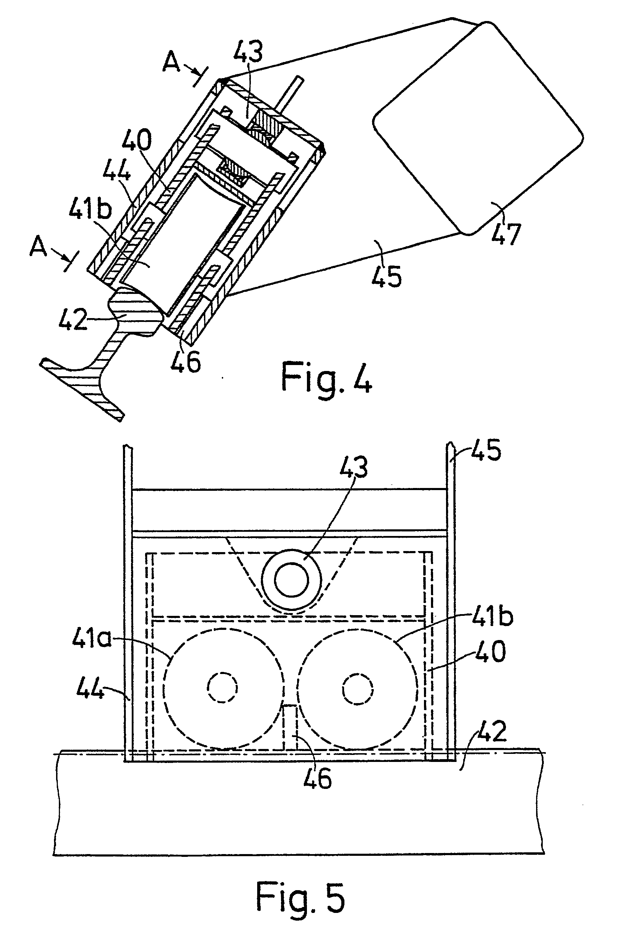

Figures 4 and 5 show another harrow support. A bogie 40 has the wheel set comprising a pair of spaced wheels 4la and 4lb, both wheels having a profiled tread engaging a corresponding profiled tread of a pivotally suspended rail 42. Through a ball joint 43 the bogie 40 is suspended from a housing 44 which is rigidly mounted on a base beam 47 of the harrow through a bracket 45.

The pivotal movement about the ball joint has three degress of freedom, but one of these is eliminated through locking of the pivoting about an axis parallel to the rail. This locking is obtained by the provision of narrow bearing strips 46 at the inner side of the housing enclosing the bogie. Only a small gap is left between these strips and outer side walls of the bogie, and the strips are mounted along the lines of intersection between a symmetry plane of the bogie through the ball joint and the side walls of the housing enclosing the bogie.

## Claims

I. A bridge scraper for raking material from a detached bulk material heap, the bridge scraper comprising a bridge (3), which extends, in use, substantially horizontally along the base of a sloping heap face (I); and a harrow (6) of triangular lattice construction and having a base (22; 47), which is movable to and fro along the bridge; the harrow being supported partly by wheel sets (7; 20a,20b; 4la,4lb) mounted at respective ends of the harrow base and travelling on a rail (4; 28; 42) which is pivotally mounted about an axis parallel to its length on, and parallel to, the bridge and partly by a wire (8) extending from the harrow apex (9) over a sheave (I0), at the top of a tower in the middle of the bridge, to a winch (II) for adjusting the inclination of the harrow; and each wheel set (7; 20a,20b; 4la,4lb) cooperating with the profile of the rail (4; 28; 42) to inhibit relative pivoting of the wheel set relatively to the rail about an axis in the plane of the harrow and perpendicular of the rail; characterized in that each wheel set comprises at least one pair of wheels (20a,20b; 4la,4lb), which are mutually spaced in the direction of the rail, the wheels being mounted in a bogie (I9,40), which is mounted on the harrow by a joint (24,25; 43) permitting comparatively free pivotal movements between the harrow and the bogie except about an axis parallel to the rail.

2. A bridge scraper according to claim I, characterized in that the joint between the harrow (6) and the bogie (I9) is a ball joint (24,25; 43) coupled between brackets (2I,26; 40,45) on the harrow base and on the bogie.

3. A bridge scraper according to claim I or 2, characterized in that the joint (24,25) is substantially locked against relative pivotal movements of the harrow and the bogie about an axis parallel to the rail (28) because the harrow base is a beam (22) with a rectangular profile and a bracket (26) on the bogie has a narrow bearing surface (27) immediately adajacent to, and engageable with, two adjacent side walls of that beam along lines perpendicular to its length.

4. A bridge scraper according to claim I or 2, characterized in that the bogie (40) is encompassed by a housing (44) on the harrow adjacent to where the joint (43) is positioned between the housing and the bogie, and narrow bearing surfaces (46) of the housing are immediately adjacent to, and engageable with, the sides of the bogie along lines in a centrl plane of the bogie perpendicular to the rail (42).

## Revendications

1. Benne chargeuse à portique destinée à râteler un matériau d'un tas d'un matériau en vrac séparé, la benne chargeuse à portique comprenant un portique (3) qui, pendant l'utilisation, est disposé en direction sensiblement horizontale le long de la base d'une face inclinée (1) d'un tas, et une herse (6) ayant une construction triangulaire en treillis et ayant une base (22; 47), qui est mobile en translation le long du portique, la herse étant supportée partiellement par des ensembles de roues (7; 20a, 20b; 41a, 41b) montés aux extrémités respectives de la base de la herse et se déplaçant sur un rail (4; 28; 42) qui est monté sous forme articulée autour d'un axe parallèle à sa longeur sur le portique et parallèlement au portique, et partiellement par un câble (8) partant du sommet (9) de la herse, passant sur une poulie (10) placée à la partie supérieure d'une tour placée au milieu du portique, et rejoignant un treuil (11) afin que l'inclinaison de la herse soit réglable, chaque ensemble de roues (7; 20a, 20b; 41a, 41b) coopérant avec le contour du rail (4; 28; 42) afin que le pivotement relatif de l'ensemble des roues par rapport au rail soit empêché autour d'un axe contenu dans le plan de la herse et perpendiculaire au rail, caractérisée en ce que chaque ensemble de roues comporte au moins une paire de roues (20a, 20b; 41a, 41b) qui sont espacées dans la direction du rail, les roues étant montées dans un chariot (19, 40) qui est monté sur la herse par l'intermédiaire d'un joint (24, 25; 43) permettant des mouvements relativement libres de pivotement entre la herse et le chariot, sauf autour d'un axe parallèle au rail.

2. Benne chargeuse à portique selon la revendication 1, caractérisée en ce que le joint placé entre la herse (6) et le chariot (19) est un joint à rotule (24, 25; 45) couplé entre les supports (21, 26; 40, 45) sur la base de la herse et sur le chariot.

3. Benne chargeuse à portique selon la revendication 1 ou 2, caractérisée en ce que le joint (24, 25) est pratiquement verrouillé afin qu'il ne permette pas les déplacement relatifs par pivotement de la herse et du chariot autour d'un axe parallèle au rail (28) parce que la base de la herse est une poutre (22) ayant un contour rectangulaire et un support (26) monté sur le chariot a une étroite surface d'appui (27) qui est immédiatement adjacente à deux parois latérales adjacentes de cette poutre et qui peut coopérer avec ces parois latérales adjacentes le long d'axes perpendiculaires à sa longueur.

4. Benne chargeuse à portique selon la revendication 1 ou 2, caractérisée en ce que le chariot (40) est entouré par un boîtier (44) monté sur la herse à proximité de l'endroit auquel le joint (43) est disposé entre le boîtier et le chariot, et des surfaces étroites d'appui (46) du boîtier sont immédiatement adjacentes aux côtés du chariot et peuvent coopérer avec eux le long d'axes qui se trouvent dans un plan central du chariot, perpendiculaire au rail (42).

## Patentansprüche

1. Brückenkratzer zum Rechnen von Material bzw. Schüttgut von einem Haufen lockeren Schüttgutes bzw. einer Halde, wobei der Brückenkratzer eine Brücke (3), die sich bei der Verwendung im wesentlichen horizontal entlang der Basis einer abfallenden Haldenfläche (1) erstreckt, und eine Egge (6) von dreieckiger Gitterkonstruktion mit einer Basis (22; 47) umfaßt, die sich entlang der Brücke hin und her bewegt; wobei die Egge teilweise durch Sätze von Rädern (7; 20a; 20b; 41a; 41b) abgestützt ist, die an jeweiligen Enden der Eggenbasis montiert sind und auf einer Schiene (4; 28; 42) laufen, die schwenkbar um eine Achse parallel zu ihrer Länge auf und parallel zu der Brücke gelagert ist, und teilweise von einem Draht (8) abgestützt ist, der sich vom Scheitel (9) der Egge über eine Seil- bzw. Antriebsscheibe (10) an der Spitze eines Turmes in der Mitte der Brücke zu einer Winde (11) hin für die Einstellung der Neigung der Egge erstreckt; und jeder Satz von Rädern (7; 20a; 20b; 41a; 41b) mit dem Profil der Schiene (4; 28; 42) zusammenwirkt, um die relative Verschwenkung des Radsatzes in bezug auf die Schiene um eine Achse in der Ebene der Egge und senkrecht zur Schiene zu verhindern; dadurch gekennzeichnet, daß jeder Radsatz wenigstens ein Paar von Rädern (20a; 20b; 41a; 41b) umfaßt, die im Abstand in bezug aufeinander in Richtung der Schiene angeordnet und in einem Drehgestell (19, 40) montiert sind, das an der Egge mittels eines Drehgelenkes (24, 25; 43) montiert ist, das verhältnismäßig freie Schwenkbewegungen zwischen der Egge und dem Drehgestell ausgenommen um eine Achse parallel zur Schiene zuläßt.

2. Brückenkratzer nach Anspruch 1, dadurch gekennzeichnet, daß das Drehgelenk zwischen der Egge (6) und dem Drehgestell (19) ein Kugelgelenk (24, 25; 43) ist, das zwischen Trägern (21, 26; 40, 45) an der Eggenbasis und dem Drehgestell gekoppelt ist.

3. Brückenkratzer nach Anspruch 1 oder 2, dadurch gekennzeichnet, daß das Drehgelenk (24, 25) im wesentlichen gegen relative Schwenkbewegungen der Egge und des Drehgestells um eine Achse parallel zur Schiene (28) verriegelt ist, da die Eggenbasis ein Balken (22) mit einem rechteckigen Profil ist und ein Träger (26) auf dem Drehgestell eine schmale Auflagefläche (27) umittelbar angrenzend an, und in Eingriff bringbar mit, zwei angrenzenden Seitenwänden dieses Balkens entlang Linien senkrecht zu seiner Länge besitzt.

4. Brückenkratzer nach Anspruch 1 oder 2, dadurch gekennzeichnet, daß das Drehgestell (40) von einem Gehäuse (44) auf der Egge angrenzend an die Stelle umgehen ist, an der das Drehgelenk (43) zwischen dem Gehäuse und dem Drehgestell angeordnet ist und daß schmale Auflageflächen (46) des Gehäuses unmittelbar angrenzend an, und in Eingriff bringbar mit, den Seiten des Drehgestells entlang Linien in einer zentralen Ebene des Drehgestells senkrecht zur Schiene (42) angeordnet sind.

Fig. 1

Fig. 2

Fig. 3

Fig. 4

Fig. 5